# EUROPÄISCHE PATENTSCHRIFT

(11) **EP 1 529 169 B1**
(45) Veröffentlichungstag und Bekanntmachung des Hinweises auf die Patenterteilung: **01.07.2009**
(21) Anmeldenummer: 03790717.7
(22) Anmeldetag: 12.08.2003
(51) Int. Cl.: F15D 1/02, F01D 5/14, B01F 5/06

(54) **VORRICHTUNG ZUM ERZEUGEN VON WIRBELN SOWIE VERFAHREN ZUM BETREIBEN DER VORRICHTUNG**
DEVICE FOR THE GENERATION OF EDDIES AND METHOD FOR OPERATION OF SAID DEVICE
DISPOSITIF POUR PRODUIRE DES TOURBILLONS ET PROCEDE POUR FAIRE FONCTIONNER LEDIT DISPOSITIF

(30) Priorität: 14.08.2002 DE 10237341
(43) Veröffentlichungstag der Anmeldung: 11.05.2005
(73) Patentinhaber: SIEMENS AKTIENGESELLSCHAFT, 80333 München (DE)
(72) Erfinder: LIEBE, Roland, 40789 Monheim (DE); LIEBE, Wolfgang, 13629 Berlin (DE)
(86) Internationale Anmeldenummer: PCT/DE2003/002721
(87) Internationale Veröffentlichungsnummer: WO 2004/020841

(56) Entgegenhaltungen:
- CH-A- 652 452
- DD-B- 215 155
- DE-A- 3 343 296
- GB-A- 763 359
- US-A- 5 525 269

## Beschreibung

Die Erfindung betrifft eine Vorrichtung zur Erzeugung und/oder Vernichtung von Wirbeln in einem Strömungsmedium, die ein oder mehrere in einem Strömungskanal angeordnete, zur Umströmung mit dem Strömungsmedium vorgesehene Profile umfasst. Sie betrifft weiter ein zum Betreiben der Vorrichtung besonders geeignetes Verfahren.

Die gezielte Erzeugung oder Vernichtung von Wirbeln spielt in vielen strömungstechnischen Anwendungen eine wichtige Rolle. Da Wirbel Rotationsenergie enthalten und somit sowohl Energie aufnehmen als auch abgeben können, können sie zur gezielten Übertragung von Energie von einem umströmten Profil auf das Strömungsmedium oder in eine Grenzschicht beziehungsweise zum Austausch von Energie, insbesondere auch Wärme, oder Stoffen zwischen verschiedenen Bereichen einer Strömung eingesetzt werden.

Für den effizienten Transport eines Strömungsmediums werden beispielsweise Systeme aus ruhenden Wirbelerzeugern eingesetzt, die durch die Erzeugung von Wirbeln Energie auf das Strömungsmedium übertragen. Dabei ist es wünschenswert, den Druckverlust, den das Strömungsmedium entlang des Systems aus Wirbelerzeugern erfährt, möglichst gering zu halten. Insbesondere soll der mittlere Massenstrom bezogen auf den Druckverlust möglichst groß sein.

Aus der EP 0 517 249 A2 ist eine Anordnung zum Transport eines Fluids bekannt, welche auf dem Prinzip des Flügelschlags von Bienen basiert und diese Bewegung nachahmt. Hierzu ist innerhalb eines Transportkanals eine Anzahl von profilierten Schaufeln auf einer starren, beweglichen Achse angeordnet, wobei ein Ende der Achse über eine Nockenwelle angetrieben werden kann und das andere Ende der Achse entlang einer Schiene, welche sich quer zur Hauptströmungsrichtung des Fluids im Kanal erstreckt, verschiebbar ist. Aufgrund der Drehung der Nockenwelle werden die an der Achse starr befestigten Profile sowohl quer zur Hauptströmungsrichtung als auch gegenüber dieser verschwenkt bewegt.

Ferner ist aus der FR 2 528 500 ein besonders leiser Ventilator für einen Kanal bekannt, in dem ein flatterbares elastisches Element zum Fördern der durch den Kanal strömenden Luft angeordnet ist.

Durch den Einsatz von Wirbelerzeugern im Strömungskanal lassen sich einem Strömungsmedium auch Geschwindigkeitsschwankungen aufprägen. Solche Geschwindigkeitsschwankungen, die beispielsweise durch an Wirbelerzeugern entstehende Schockwellen erzeugt werden, erhöhen sowohl den Wärme- als auch den Stoffaustausch im Strömungsmedium quer zur Strömungsrichtung erheblich. Durch die gezielte Anbringung von Wirbelerzeugern im Strömungskanal kann somit eine verstärkte Kühlwirkung der Strömung auf thermisch besonders belastete Bauteile erzielt werden. Dabei sollten die Wirbelerzeuger derart positioniert und dimensioniert sein, dass der auf den Druckverlust, den das Strömungsmedium entlang des Systems aus Wirbelerzeugern erfährt, bezogene Wärmeübergangskoeffizient möglichst groß ist. Auf diese Weise lässt sich beispielsweise durch den Einsatz des Systems aus Wirbelerzeugern in einer Gasturbine sowohl im Bereich der Brennkammer als auch im Bereich der Turbinenschaufeln Kühlluft einsparen und somit bei gleichzeitiger Erhöhung des Wirkungsgrades der Gasturbine ihre NO_{X}-Emissionen senken.

Der verstärkte Stoffaustausch quer zur Strömungsrichtung in einem Strömungsmedium mit Geschwindigkeitsschwankungen kann zur verstärkten Mischung des Strömungsmediums genutzt werden. Beispielsweise kann durch die besonders gründliche Mischung von Brenngas und Luft in einer Gasturbinenanlage eine vollständige Verbrennung des Brenngases erreicht und somit ihre NO_{X}-Emissionen gesenkt werden.

Die Vielfalt der technischen Anwendungen von Wirbelerzeugern oder -vernichtern bedingt ein großes Interesse an der theoretischen Berechnung der Entstehung und Entwicklung von Wirbeln. Sie sind insbesondere notwendig, um Form und Positionierung von Wirbelerzeugern und -vernichtern im Hinblick auf ihre Wirkung auf ein Strömungsmedium optimal zu gestalten. Die Berechnung turbulenter Strömungen erfolgt üblicherweise entweder explizit über die Lösung der Navier-Stokes-Gleichung des Problems, eine Verfahrensweise, die aber vor allem bei dreidimensionalen Anwendungen zu komplex und zu aufwendig ist, oder aber über entsprechende Modelle der klassischen Tragflügeltheorie.

Im Rahmen der klassischen Tragflügeltheorie lassen sich zwar turbulente Strömungen an starren, also passiv umströmten und nicht beschleunigten, Bauteilen beschreiben. Allerdings versagt die klassische Tragflügeltheorie bei aktiven, also beschleunigt bewegten Bauteilen. Sie setzt nämlich die glatte Abströmung des Strömungsmediums an der Hinterkante des umströmten Profils, die so genannte Kutta-Bedingung, voraus, sowie eine endliche Anströmgeschwindigkeit und eine quasistatische, lineare Behandlung. Ein Ablösen der Strömung von dem umströmten Profil und ein Aufrollen von entstehenden Wirbeln, wie es bei instationären Strömungsvorgängen an beschleunigt bewegten Profilen geschieht, kann im Rahmen der Theorie nicht behandelt werden. Bei technischen Anwendungen werden daher üblicherweise passiv umströmte Wirbelerzeuger eingesetzt, die sich mittels der klassischen Aerodynamik beschreiben lassen. Passiv umströmte Wirbelerzeuger weisen allerdings vergleichsweise hohe dynamische Widerstände auf. Werden sie in einem Strömungskanal platziert, so resultiert daher ein unerwünscht großer Druckabfall im Strömungsmedium.

Der Erfindung liegt daher die Aufgabe zugrunde, eine Vorrichtung zur Erzeugung von Wirbeln in einem Strömungsmedium der oben genannten Art anzugeben, mit der auf besonders einfache Weise und mit besonders geringem Energieaufwand bei möglichst geringem Druckabfall in einem Strömungsmedium Wirbel erzeugt werden können. Des Weiteren soll ein zum Betreiben der Vorrichtung besonders geeignetes Verfahren angegeben werden.

Bezüglich der Vorrichtung wird diese Aufgabe erfindungsgemäß durch eine Vorrichtung gemäß Anspruch 1 gelöst.

Als "Profile" können dabei beliebige, geeignet dimensionierte und konturierte Einbauten im Strömungskanal vorgesehen sein, die insbesondere hinsichtlich ihrer Formgebung an die auslegungsbedingt im Strömungskanal erwarteten Strömungsverhältnisse angepasst sind.

Die Erfindung geht dabei von der Überlegung aus, dass für eine hohe Effizienz des Wirbelerzeugers der mittlere Durchsatz an Strömungsmedium bezogen auf dessen Druckverlust entlang des Strömungskanals möglichst groß sein sollte. Um den Druckverlust gering zu halten, sollte die Übertragung von Energie vom Wirbelerzeuger auf das Strömungsmedium konsequent verbessert werden. Eine bessere Übertragung von Energie kann dadurch erreicht werden, dass der Energieinhalt des erzeugten Wirbels vergrößert wird. Wie sich herausgestellt hat, lassen sich mit aktiven, also beschleunigten, Wirbelerzeugern sowohl in laminaren als auch in turbulenten Strömungen höhere Energieinhalte dadurch erzielen, dass der Wirbel vor seiner Ablösung von dem Profil des Wirbelerzeugers beschleunigt wird. Daher sollten Wirbelerzeuger für eine besonders hohe Effizienz relativ zum Strömungskanal beschleunigt bewegt werden. Eine gleichmäßige Wirbelerzeugung, die diesen Anforderungen gerecht wird, lässt sich dabei auf besonders einfache Weise durch eine periodische Oszillationsbewegung des Wirbelerzeugers erreichen.

Um die Vorgänge an periodisch bewegten Wirbelerzeugern zu verstehen, lässt sich die Erkenntnis nutzen, dass ein von einem solchen Wirbelerzeuger erzeugter und sich ablösender Wirbel gut durch einen räumlich begrenzten Wirbel mit einem starren Kern beschrieben werden kann, einen so genannten "Finiten Kantenwirbel". Ein solcher Wirbel wird unmittelbar nach seiner Bildung an der Hinterkante des umströmten Profils durch auf sein Zentrum zuströmendes Strömungsmedium bis zu seinem im Weiteren zeitlichen Verlauf als konstant angenommenen Radius a aufgefüllt. Dadurch wird der Wirbel in Rotation versetzt und seine Rotationsgeschwindigkeit nimmt während der anschließenden "Haftungsphase" weiter zu. Dabei erfährt der Wirbel eine Netto-Durchströmung mit Strömungsmedium und die Komponente der Strömung aus der Richtung der Profilhinterkante nimmt bis zu einem maximalen Wert zu. Der Wirbel haftet, nachdem er seine stabile Größe erreicht hat, solange an dem Profil, bis dieser maximale Wert erreicht ist, und löst sich dann ab.

Während der Wirbel noch am Profil haftet, induziert seine Rotation eine Tangentialströmung entlang der Profiloberfläche, die so genannte "Mantelströmung". Die aerodynamische Wechselwirkung der Mantelströmung mit der Anströmung des Strömungsmediums auf das Profil erzeugt ein orthogonales Kräftepaar, den Vortrieb und den Widerstand. Je nachdem, welche der beiden Kräfte dominiert, ändert sich der Charakter der Wechselwirkung zwischen Strömungsmedium und Profil. So ist beispielsweise bei einer Bewegung des Profils mit einer vergleichsweise hohen Frequenz der Vortriebscharakter der Wechselwirkung dominierend und es wird Energie vom Wirbelerzeuger auf das Strömungsmedium übertragen, während bei einer Bewegung mit niedriger Frequenz der Widerstandscharakter dominiert und Energie vom Strömungsmedium auf den Wirbelerzeuger übergeht.

Diese Erkenntnisse im Rahmen des so genannten "Finiten Kantenwirbel Modells" werden bei der Verwendung neuer Kenngrößen genutzt. Als Kenngröße, die den Vortriebs- bzw. Widerstandscharakter der Strömung beschreibt, eignet sich das Verhältnis der über eine Bewegungsperiode des Profils gemittelten Strömungsgeschwindigkeit bezogen auf den mittleren Querschnitt des Profils zu der maximalen Strömungsgeschwindigkeit an der Profilhinterkante. Liegt diese Größe f:= vₘ/vₘₐₓ zwischen 0,2 und 0,5, so weist die Strömung Vortriebscharakter auf. Ist f dagegen größer als 0,5, so weist sie Widerstandscharakter auf.

Als weitere wichtige Kenngrößen lassen sich die Reynoldszahl der maximalen Kantenumströmung, die reduzierte Frequenz und die Strouhal-Zahl verwenden. Die Reynoldszahl der maximalen Kantenumströmung ist dabei als Produkt aus maximaler Strömungsgeschwindigkeit an der Profilhinterkante und Längenausdehnung des umströmten Profils geteilt durch die kinematische Viskosität des Strömungsmediums definiert, die reduzierte Frequenz als Produkt aus Kreisfrequenz der periodischen Oszillationsbewegung und Längenausdehnung des umströmten Profils geteilt durch die über eine Bewegungsperiode des Profils gemittelte Strömungsgeschwindigkeit bezogen auf den mittleren Querschnitt des Profils und die Strouhal-Zahl als Frequenz der periodischen Bewegung und Längenausdehnung des umströmten Profils geteilt durch die über eine Bewegungsperiode des Profils gemittelte Strömungsgeschwindigkeit bezogen auf den mittleren Querschnitt des Profils. Die genannten Kenngrößen werden anstelle der in der klassischen Aerodynamik verwendeten externen, konstanten Profil-Anströmgeschwindigkeit verwendet und lassen eine wesentlich differenziertere und realistischere Charakterisierung der resultierenden Strömung zu.

Vorteilhafterweise sind die Form, Anzahl und Größe der Profile derart gewählt, dass im Betriebsfall des Wirbelerzeugers der Quotient aus der über eine Bewegungsperiode des Profils gemittelten Strömungsgeschwindigkeit bezogen auf den mittleren Querschnitt des Profils zu der maximalen Strömungsgeschwindigkeit an der Profilhinterkante einen vorgegebenen Wert aufweist. Insbesondere kann dieser Wert so gewählt sein, dass abhängig von der Art der technischen Anwendung eine Strömung mit Widerstandscharakter oder mit Vortriebscharakter resultiert.

Abhängig von der zu erfüllenden technischen Aufgabe des Wirbelerzeugers sind unterschiedliche Arten von periodischen Oszillationsbewegungen der Profile denkbar und günstig.

In manchen Anwendungen ist es günstig, einen erzeugten Wirbel wieder zu vernichten, nachdem er eine gewisse Strecke im Strömungskanal zurückgelegt hat. Dies ist beispielsweise der Fall, wenn die Nachlauf-Restenergie des Wirbels möglichst vollständig genutzt werden soll. In einem solchen Fall ist dem Wirbelerzeuger vorteilhafterweise strömungsmediumseitig eine Vorrichtung zur Vernichtung von Wirbeln nachgeschaltet.

Aufgrund der Tatsache, dass aktive Wirbelerzeuger bei geringer Antriebsleistung in der Lage sind, auf besonders effiziente Weise Energie und Stoffe zu übertragen, können sie in einer Vielzahl von technischen Bereichen zum Einsatz kommen. Bei der Beförderung eines Strömungsmediums durch einen Strömungskanal oder eine Rohrleitung strebt man beispielsweise einen möglichst hohen Massenstrom bei gleichzeitig geringem Druckverlust im Strömungsmedium an. Eine erwünschte Erhöhung der Strömungsgeschwindigkeit des Strömungsmediums bei geringem Druckverlust lässt sich aber gerade mit Hilfe eines aktiven Wirbelerzeugers erzielen. Daher ist im Strömungskanal einer Förderstrecke vorteilhafterweise eine Vorrichtung zur aktiven Erzeugung von Wirbeln angeordnet, die eine Anzahl von Wirbelerzeugern, die eine periodische Bewegung mit gleicher Kreisfrequenz ω und gleicher Phase ausführen, umfasst. Alternativ dazu kann die Phase der Wirbelerzeuger auch entgegengesetzt, also um 180 Grad gegeneinander verschoben, sein.

Eine weitere wichtige Anwendung aktiver Wirbelerzeuger ist die Erhöhung der Effizienz von Gitterströmungen. Gitterströmungen werden eingesetzt, um den mittleren Wirkungsgrad eines axialen Gitters bei gleichzeitig möglichst geringem Druckverlust zu maximieren. Dazu werden beispielsweise Leitschaufeln den Laufschaufeln einer Gasturbine strömungsmediumseitig vorgeschaltet. Zur weiteren Erhöhung des Gitterwirkungsgrades wird dem axialen Gitter vorteilhafterweise eine Vorrichtung zur aktiven Erzeugung von Wirbeln strömungsmediumseitig vorgeschaltet, die eine Anzahl von Profilen, die eine periodische Bewegung mit gleicher Kreisfrequenz ω und gleicher Phase ausführen, umfasst. Insbesondere können auf diese Weise periodische Strömungspulse erzeugt werden, die in ihrer Periode und Länge optimal auf die ebenfalls periodische eigentliche Gitterströmung abgestimmt sind. Des Weiteren kann der die Effizienz des Gitters steigernde, theoretisch noch nicht vollständig verstandene so genannte "Clocking-Effekt" genutzt werden, der zum Tragen kommt, wenn einzelne, relativ zueinander bewegte Gitter miteinander wechselwirken.

Einem Strömungsmedium aufgeprägte Geschwindigkeitsschwankungen lassen sich zur besonders effizienten Kühlung thermisch stark belasteter Bauteile nutzen. Solche Geschwindigkeitsschwankungen lassen sich auf besonders effiziente Weise durch aktive Wirbelerzeuger generieren und erhöhen sowohl den Wärme- als auch den Stoffaustausch im Strömungsmedium quer zur Strömungsrichtung erheblich. Durch die gezielte Anbringung von aktiven Wirbelerzeugern im Strömungskanal kann somit eine effiziente Kühlung thermisch besonders belasteter Bauteile erreicht werden. Dazu umfasst eine Kühlvorrichtung vorteilhafterweise einen Strömungskanal, einen durch den Strömungskanal geleiteten Kühlstrom sowie eine innerhalb des Strömungskanals angeordnete Vorrichtung, die zur aktiven Erzeugung von Wirbeln ein oder mehrere periodisch bewegte Profile aufweist.

Einem Strömungsmedium aufgeprägte Geschwindigkeitsschwankungen verstärken auch den Stoffaustausch quer zur Strömungsrichtung. Dieser Effekt kann gezielt zur verstärkten Mischung eines Strömungsmediums genutzt werden. Eine besonders hohe Mischgüte bei gleichzeitig niedrigem Druckverlust kann dadurch erzielt werden, dass zur Erzeugung der Geschwindigkeitsschwankungen aktive Wirbelerzeuger eingesetzt werden. Meist ist es wünschenswert, die dem Strömungsmedium durch erzeugte Wirbel aufgeprägten Geschwindigkeitsschwankungen nach abgeschlossener Mischung wieder zu vernichten. Daher umfasst eine Mischstrecke vorteilhafterweise eine Vorrichtung zur aktiven Erzeugung von Wirbeln, der eine Vorrichtung zur Vernichtung von Wirbeln strömungsmediumseitig nachgeschaltet ist.

Mit einem aktiven Wirbelerzeuger lassen sich auf besonders effiziente Art und Weise bei gleichzeitig geringem Druckabfall innerhalb des Strömungsmediums Stoff- und Energieströme erzeugen und/oder verstärken, beispielsweise beim Mischen von Brenngas und Luft in einem Verdichter oder bei der Kühlung thermisch besonders belasteter Bauteile. Daher wird der aktive Wirbelerzeuger vorteilhafterweise in einer Gasturbine eingesetzt.

Bezüglich des Verfahrens wird die genannte Aufgabe durch das Verfahren gemäß Anspruch 9 gelöst.

Neue Erkenntnisse im Rahmen des so genannten "Finiten Kantenwirbel Modells" zeigen, wie es möglich ist, die Ausprägung von Widerstands- bzw. Vortriebscharakter einer Strömung um bewegte Profile, also die Richtung der Energieübertragung zwischen Profil und Strömungsmedium, gezielt zu beeinflussen. Eine wichtige Kenngröße innerhalb dieses Modells ist der Quotient aus der über eine Bewegungsperiode des Profils gemittelten Strömungsgeschwindigkeit bezogen auf den mittleren Querschnitt des Profils und der maximalen Strömungsgeschwindigkeit an der Profilhinterkante. Erfindungsgemäß wird die Richtung der Energieübertragung zwischen bewegtem Profil und Strömungsmedium über diesen Quotienten eingestellt. Alternativ lässt sich die Richtung der Energieübertragung zwischen Profil und Strömungsmedium auch über das Produkt aus maximaler Strömungsgeschwindigkeit an der Profilhinterkante und der Längenausdehnung des umströmten Profils geteilt durch die kinematische Viskosität des Strömungsmediums einstellen.

In manchen technischen Anwendungen können sich Nachteile ergeben, wenn erzeugte Wirbel im Weiteren Verlauf der Strömung einen vergleichsweise hohen Grad an Turbulenz der Strömung hervorrufen. Vorteilhafterweise werden daher die erzeugten Wirbel stromabwärts von der Position im Strömungskanal, an der sie erzeugt wurden, ganz oder teilweise wieder vernichtet.

Wie Berechnungen im Rahmen des "Finite Kantenwirbel Modells" ergeben haben, lassen sich durch den Einsatz aktiver Wirbelerzeuger besonders effizient und bei vergleichsweise geringen Druckabfall innerhalb des Strömungsmediums Stoff- und Energieströme erzeugen und/oder verstärken. Daher ist das Verfahren zur Erzeugung von Wirbeln durch aktive Wirbelerzeuger besonders geeignet für verschiedene technische Anwendungen, beispielsweise zum Transportieren oder Mischen von Strömungsmedien, zur Effizienzsteigerung von Gitterströmungen und zur Kühlung thermisch besonders belasteter Bauteile.

Die mit der Erfindung erzielten Vorteile bestehen insbesondere darin, dass durch die nunmehr vorgesehene Verwendung periodisch bewegter Wirbelerzeuger Wirbel mit vergleichsweise geringem energetischen Aufwand erzeugt werden können. Die periodische Bewegung der Profile lässt sich dabei technisch vergleichsweise einfach durch die Verwendung eines äußeren mechanischen, elektrischen oder elektro-hydraulischen Antriebs umsetzen. Bei der Verwendung aktiver im Gegensatz zu der passiver Wirbelerzeuger lassen sich in einem Strömungsmedium Stoff- und Energieströme erzeugen und/oder wirkungsvoll verstärken bei gleichzeitig besonders geringen Druckverlusten innerhalb des Strömungsmediums. Der niedrige Druckverlust lässt sich dabei darauf zurückführen, dass aktive Wirbelerzeuger durch sehr geringe Widerstände gekennzeichnet sind.

Aktive Wirbelerzeuger haben aufgrund der erwähnten günstigen technischen Eigenschaften eine Vielzahl von Anwendungsmöglichkeiten. Durch die Verwendung aktiver Wirbelerzeuger kann beispielsweise die Gitterströmung im Verdichter einer Gasturbine effizienter gestaltet und der Clocking-Effekt verstärkt genutzt werden. Auch die Kühlung thermisch belasteter Bauteile kann durch aktive Wirbelerzeuger verbessert und somit Kühlluft eingespart werden. Des Weiteren ist durch die Verwendung aktiver Wirbelerzeuger eine gründlichere Mischung beispielsweise von Brenngas und Luft vor der Verbrennung zur Reduktion der NO_{X}-Emissionen möglich. Somit kann eine Erhöhung des Wirkungsgrades der Gasturbine und eine Reduktion ihrer Emissionen mit vergleichsweise geringem technischen Aufwand erzielt werden.

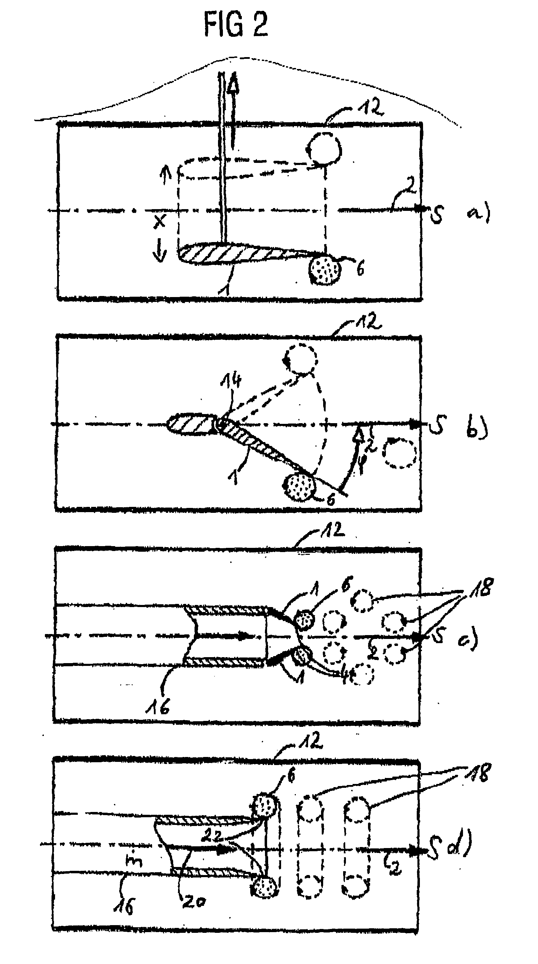

Ein Ausführungsbeispiel der Erfindung wird anhand der FIG 2a näher erläutert. Es zeigen:
- FIG 1: ein von einem Strömungsmedium umströmtes Profil, an dessen Hinterkante ein Wirbel erzeugt wird,
- FIG 2: verschiedene Ausführungen einer ein oder mehrere Profile umfassenden Vorrichtung zur Erzeugung von Wirbeln in einem Strömungsmedium, darunter in FIG 2a die erfindungsgemäße Ausführung,
- FIG 3: eine Strecke zum Transport eines Strömungsmediums, die eine Vorrichtung zur Erzeugung von Wirbeln umfasst,
- FIG 4: eine weitere Strecke zum Transport eines Strömungsmediums,
- FIG 5: einen in die Ebene abgerollten zylindrischen Schnitt durch eine Leitschaufel- und Laufschaufelreihe einer Gasturbine, der eine Vorrichtung zur Erzeugung von Wirbeln vorgeschaltet ist,
- FIG 6: eine Vorrichtung zur Kühlung thermisch belasteter Bauteile, und
- FIG 7: eine Vorrichtung zum Mischen eines Strömungsmediums.

Gleiche Teile sind in allen Figuren mit denselben Bezugszeichen versehen.

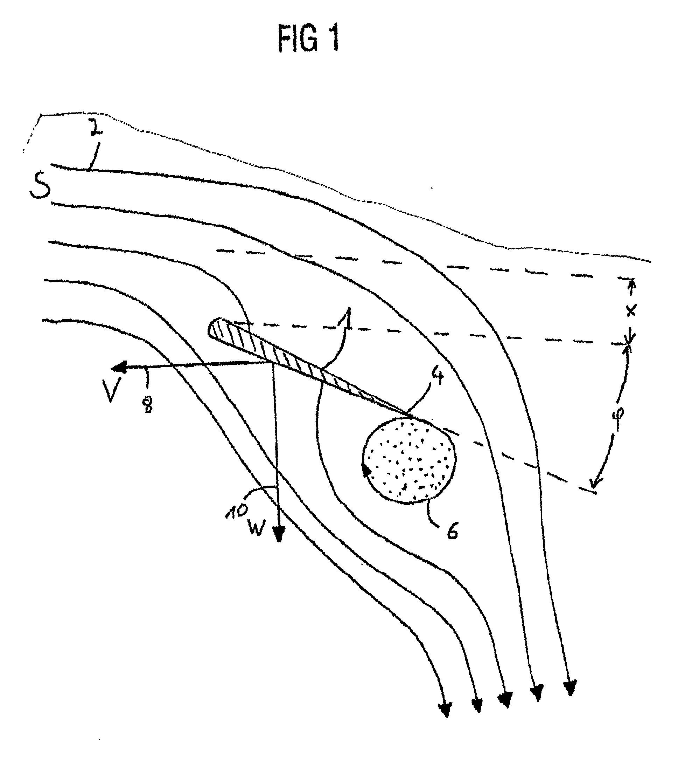

FIG 1 zeigt eine Vorrichtung zur Erzeugung von Wirbeln mit einem von einem Strömungsmedium S umströmten Profil 1, das sich beispielsweise in einem in FIG 1 nicht dargestellten Strömungskanal befinden kann. Die Strömungsrichtung des Strömungsmediums S ist durch die Pfeile 2 in der Art von Stromlinien angedeutet. Das Profil 1 ist durch einen in FIG 1 nicht dargestellten äußeren Antrieb bewegbar, wobei die Bewegung sich im allgemeinen aus einer Verschiebung des Profils 1 um eine Strecke x und einer Rotation des Profils 1 um einen Winkel ϕ zusammensetzt. Die Bewegung erfolgt periodisch mit einer Kreisfrequenz ω. Bei der Bewegung des Profils 1 relativ zum Strömungsmedium S bilden sich während jeder Periode der Bewegung zwei Wirbel an der Hinterkante 4 des Profils 1, die unmittelbar nach ihrer Bildung wachsen, kurze Zeit an der Hinterkante 4 haften und sich dann ablösen.

Die sich bildenden Wirbel lassen sich vergleichsweise realistisch mit Hilfe des "Finite Kantenwirbel Modells" beschreiben. Im Rahmen dieses Modells werden sich an der Hinterkante 4 des Profils 1 bildende Wirbel nicht als ideale Wirbel, sondern als Wirbel mit scharf definiertem Radius und starr rotierendem Kern beschrieben. In FIG 1 ist ein solcher, so genannter "Finiter Kantenwirbel" 6 dargestellt. Der Finite Kantenwirbel 6 wird unmittelbar nach seiner Bildung an der Hinterkante 4 des umströmten Profils 1 durch auf sein Zentrum zuströmendes Strömungsmedium S bis zu seinem Radius a aufgefüllt und in Rotation versetzt. Seine Rotationsgeschwindigkeit nimmt während der anschließenden "Haftungsphase" weiter zu, wo der Finite Kantenwirbel 6 eine Netto-Durchströmung mit Strömungsmedium S erfährt und die Komponente der Strömung aus der Richtung der Hinterkante 4 bis zu einem maximalen Wert zunimmt. Der Finite Kantenwirbel 6 löst sich in dem Moment, in dem dieser maximale Wert erreicht ist, von der Hinterkante 4 ab. Während der Haftungsphase induziert die Rotation des Finiten Kantenwirbels 6 eine Tangentialströmung entlang der Profiloberfläche, die so genannte "Mantelströmung". Die Mantelströmung tritt in Wechselwirkung mit dem anströmenden Strömungsmedium S, wobei ein orthogonales Kräftepaar, der Vortrieb V, angedeutet durch den Pfeil 8, und der Widerstand W, angedeutet durch den Pfeil 10, entsteht.

Der Charakter der Wechselwirkung zwischen Strömungsmedium S und Profil 1 hängt maßgeblich davon ab, welche der beiden Kräfte dominiert. Wie sowohl theoretische Untersuchungen im Rahmen des "Finite Kantenwirbel Modells" als auch experimentelle Befunde zeigen, ist bei einer Bewegung des Profils 1 mit einer verhältnismäßig hohen Kreisfrequenz ω der Vortriebscharakter der Wechselwirkung dominierend und es wird Energie vom Profil 1 auf das Strömungsmedium S übertragen. Bei einer Bewegung mit niedriger Kreisfrequenz ω dagegen dominiert ihr Widerstandscharakter und die Energieübertragung erfolgt umgekehrt vom Strömungsmedium S auf das Profil 1.

Das verhältnismäßig einfache "Finite Kantenwirbel Modell" erlaubt im Gegensatz zur klassischen Tragflügeltheorie die Beschreibung der Umströmung eines beschleunigt bewegten Profils 1. Somit macht es den gezielten Einsatz von aktiven Wirbelerzeugern, die also eine Anzahl von beschleunigt bewegten Profilen 1 umfassen, möglich. Ein beschleunigt bewegtes Profil 1 weist im Gegensatz zu einem starren einen erheblich geringeren dynamischen Widerstand auf. Mit anderen Worten: Ein bewegtes Profil 1 verursacht einen erheblich geringeren Druckverlust innerhalb des Strömungsmediums S als ein starres. Es lässt sich somit beispielsweise zum effizienten Transportieren oder Mischen von Strömungsmedien S einsetzen, wobei man aufgrund des geringen dynamischen Widerstandes des Profils 1 einen vergleichsweise hohen Durchsatz an Strömungsmedium bei gleichzeitig niedrigem Druckverlust erzielt.

Es sind verschiedene Arten der periodischen Bewegung des Profils 1 denkbar. FIG 2 zeigt verschiedene Möglichkeiten der periodischen Bewegung des Profils 1 relativ zum Strömungsmedium S. Das Strömungsmedium S durchströmt in der von dem Pfeil 2 angedeuteten Richtung einen Strömungskanal 12. Wie in FIG 2a dargestellt kann im Strömungsmedium S ein Finiter Kantenwirbel 6 erzeugt werden, indem erfindungsgemäß ein Profil 1 senkrecht zur Strömungsrichtung periodisch um eine Strecke x verschoben wird, also eine reine Translationsbewegung ausführt.

FIG 2b zeigt eine andere Möglichkeit der periodischen Bewegung des Profils 1, bei der das Profil 1 eine reine Rotationsbewegung um eine Drehachse 14 senkrecht zur Strömungsrichtung um einen Winkel ϕ ausführt. In technischen Anwendungen ist unter Umständen der Einsatz von Kombinationen von Translations- und Rotationsbewegungen vorteilhaft. Es können auch, wie in FIG 2c gezeigt, mehrere Profile 1 zur Erzeugung von Wirbeln eingesetzt werden. Mit einer Konstellation wie in FIG 2c, bei der ein Paar von Profilen 1 am Ausgang eines im Strömungskanal 12 angeordneten weiteren Strömungskanals 16 im Gegentakt oder Gleichtakt schwingt, lassen sich beispielsweise zwei im Strömungskanal 12 und im Weiteren Strömungskanal 16 strömende Strömungsmedien effizient vermischen und/oder transportieren. Bei einer solchen Anordnung lösen sich in jeder Schwingungsperiode der Profile 1 zwei Paare von Finiten Kantenwirbeln 6 von den Profilhinterkanten 4 ab und bilden einen so genannten Nachlauf 18 im Strömungskanal 12. FIG 2d zeigt eine Vorrichtung zum Erzeugern von Finiten Kantenwirbeln 6 ohne periodisch bewegte Komponenten. Wiederum ist hier innerhalb eines Strömungskanals 12 ein weiterer Strömungskanal 16 angeordnet, der mit einem Strömungsmedium S durchströmt wird. Allerdings durchströmt das Strömungsmedium S des weiteren Strömungskanals 16 mit einer periodischen Variation seines Massenstromes m. Am Austritt 22 des weiteren Strömungskanals bildet sich in jeder Periode ein Paar Finiter Kantenwirbel 6, das sich nach der Haftungsphase ablöst und im Strömungskanal 12 einen Nachlauf 18 bildet.

Wie Berechnungen im Rahmen des Finiten Kantenwirbel Modells ergeben haben, sollten die Profile 1 in ihrer Form und Dimensionierung gewissen Regeln folgen. Insbesondere sollten die Profile 1 eine möglichst lange, aber scharfe Hinterkante 4 aufweisen, so dass die maximale Strömungsgeschwindigkeit an der Hinterkante 4 möglichst hoch ist und der entstehende Finite Kantenwirbel 6 einen vergleichsweise kleinen Radius aufweist. Eine harmonische Schwingungsform des Profils 1 ist dabei nicht in jedem Fall wünschenswert, um eine lange Haftungsphase des Finiten Kantenwirbels 6 und einen hohen Vortrieb zu erzielen. Je nach Anwendungsgebiet des Wirbelerzeugers müssen Schwingungsfrequenz und -amplitude, die Lage der Drehachse 14 bei einer Rotation und die allgemeine Form des Profils 1 so optimiert werden, dass mit möglichst geringem äußeren Antrieb und bei niedrigem Druckabfall eine optimale Energieübertragung zwischen Profil 1 und Strömungsmedium S stattfindet.

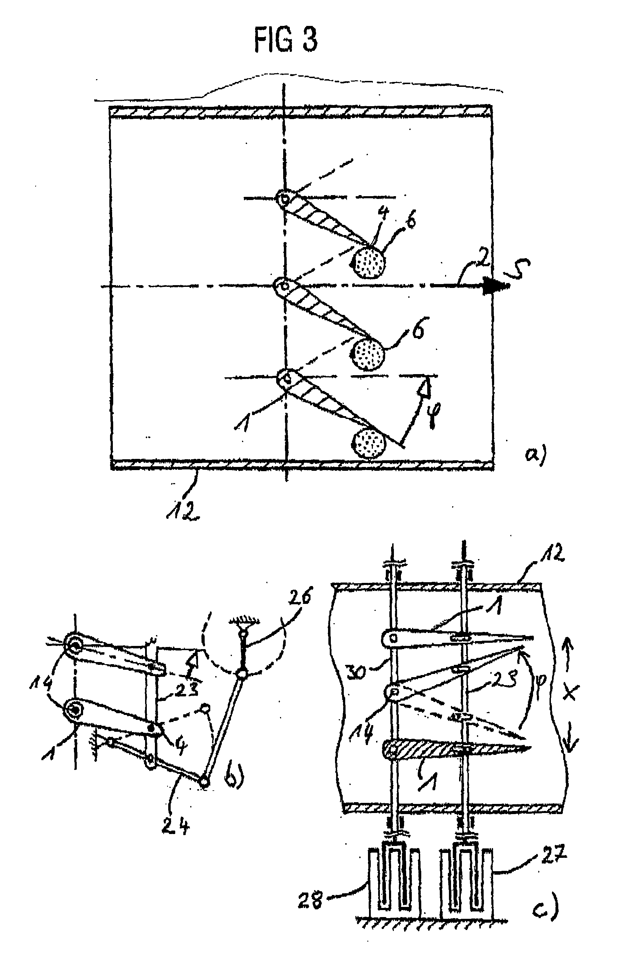

Aufgrund der günstigen Eigenschaften der Finiten Kantenwirbel 6 lässt sich ihre Erzeugung beispielsweise zum Transportieren eines Strömungsmediums nutzen. FIG 3 zeigt eine Strecke zum Transport eines Strömungsmediums, die eine Vorrichtung zur Erzeugung von Finiten Kantenwirbeln 6 umfasst. Wie in FIG 3a zu erkennen ist, sind in einem Strömungskanal 12 mehrere, beispielsweise drei, Profile 1 angeordnet, die eine periodische Bewegung im Gleichtakt ausführen. Die periodische Bewegung kann in einer Rotation um den Winkel ϕ um eine Drehachse 14 oder auch in einer Kombination der Rotation mit einer periodischen Verschiebung des Profils 1 bestehen. An den jeweiligen Hinterkanten 4 der im Gleichtakt schwingenden Profile 1 entstehen in jeder Periode jeweils zwei Finite Kantenwirbel 6. Die von den Profilen 1 durch die Wirbelbildung auf das Strömungsmedium S übertragene Energie wird für den Transport des Strömungsmediums S durch den Strömungskanal 12 genutzt. Führen die Profile 1 eine reine Rotationsbewegung aus, können sie durch den in FIG 3b dargestellten äußeren Antrieb angetrieben werden. Die Profile 1 sind dazu im Bereich ihrer Hinterkante 4 an einer Verbindungsstange 23 angebracht, die über einen Gelenkhebel 24 mit einem Kurbelantrieb 26 verbunden ist. Im Betriebsfall des Wirbelerzeugers bewegt der Kurbelantrieb 26 die Verbindungsstange 23 auf und ab und treibt somit die Rotation der Profile 1 um ihre jeweilige Drehachse 14 an.

Führen die Profile 1 dagegen eine Kombination aus Translations- und Rotationsbewegung aus, können sie durch den in FIG 3c dargestellten äußeren Antrieb angetrieben werden. Die dargestellte Antriebsvorrichtung umfasst dazu eine Verbindungsstange 23, an denen das oder die Profile 1 in ihrem hinteren Bereich angebracht sind sowie eine weitere Verbindungsstange 30, die die Profile 1 in ihrem vorderen Bereich miteinander verbindet. Sowohl die Verbindungsstange 23 als auch die weitere Verbindungsstange 30 führen im Betriebsfall der Vorrichtung eine periodische Bewegung in Aufwärts- und Abwärtsrichtung aus, die durch einen elektromagnetischen Antrieb 27 beziehungsweise über einen weiteren elektromagnetischen Antrieb 28 bewirkt wird. Um eine Rotation der Profile 1 um die Drehachse 14 zu erzielen, arbeiten der elektromagnetische Antrieb 27 und der weitere elektromagnetische Antrieb 28 nicht gleichphasig. Stattdessen kann der elektromagnetische Antrieb 27 einen Phasenvorlauf um 90 Grad gegenüber dem weiteren elektromagnetischen Antrieb 28 aufweisen. Die Profile 12 führen somit eine Kombination aus einer Translationsbewegung um die Strecke x und einer Rotationsbewegung um den Winkel ϕ innerhalb des Strömungskanals 12 aus.

Durch den Einsatz der in FIG 3 dargestellten Vorrichtung durch einen Strömungskanal 12 lässt sich das Strömungsmedium S besonders effizient durch einen Strömungskanal 12 transportieren. Wie Berechnungen im Rahmen des "Finite Kantenwirbel Modells" ergeben haben, stellt die periodische Bewegung der Profile 1 nämlich sicher, dass besonders effizient Energie von den Profilen 1 auf das Strömungsmedium S übertragen wird. Insbesondere lässt sich auf diese Weise der auf den Druckverlust bezogene Durchsatz an Strömungsmedium S durch den Strömungskanal 12 maximieren.

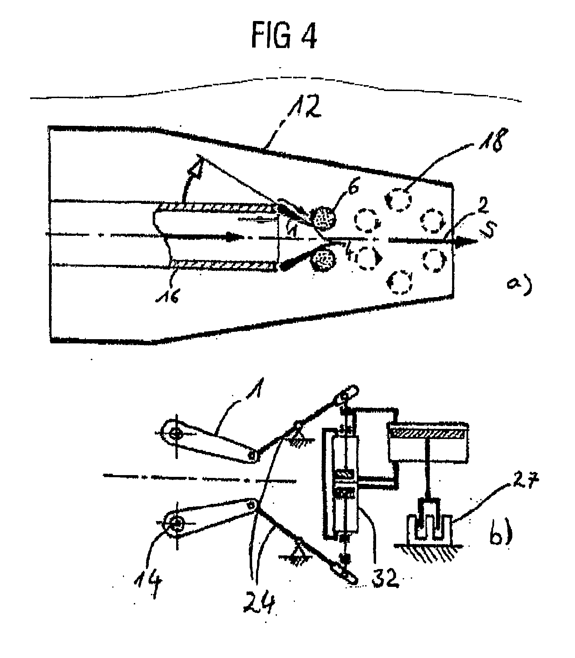

Für den effizienten Transport eines Strömungsmediums S durch einen Strömungskanal 12 sind auch im Gegentakt schwingende Profile 1 geeignet, wie sie in FIG 4 dargestellt sind. FIG 4a zeigt eine alternative Strecke zum effizienten Transportieren eines Strömungsmediums S. Innerhalb eines Strömungskanals 12 ist ein weiterer Strömungskanal 16 beispielsweise konzentrisch angeordnet, an dessen Austritt ein Paar Profile 1 angeordnet ist, die jeweils periodische Rotationsbewegungen ausführen. Sie schwingen dazu im Gegentakt, also mit einer Phasenverschiebung von 180 Grad und erzeugen an ihrer Hinterkante 4 pro Periode jeweils zwei Finite Kantenwirbel 6, die sich nach ihrer Haftungsphase von den Hinterkanten 4 ablösen und im Strömungskanal 12 einen Nachlauf 18 erzeugen. In technischen Anwendungen kann es beispielsweise zur Nutzung der Nachlauf-Restenergie günstig sein, die abgelösten Wirbel ganz oder teilweise wieder zu vernichten. Dazu kann den Profilen 1 strömungsmediumseitig ein in FIG 4 nicht dargestellter Wirbelvernichter nachgeschaltet sein.

FIG 4b zeigt einen zum Betreiben des in FIG 4a dargestellten Wirbelerzeugers geeigneten Antrieb. Dazu umfasst der Antrieb einen elektromagnetischen Antrieb 27, der einen hydraulisch arbeitenden Arbeitszylinder 32 ansteuert, und zwei Gelenkhebel 24, die an den Profilen 1 angebracht sind und über ihre durch den Arbeitszylinder 32 hervorgerufene Bewegung eine Rotation der Profile 1 um ihre jeweilige Drehachse 14 bewirken.

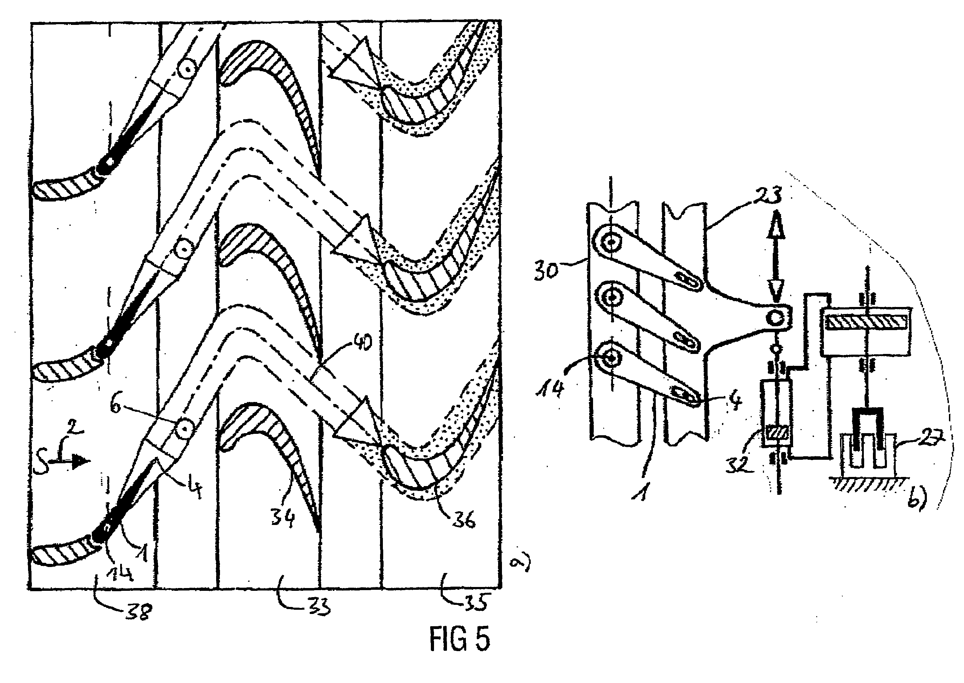

Außer zum effizienten Transport eines Strömungsmediums können aktive Wirbelerzeuger auch in verschiedenen anderen technischen Bereichen zur Anwendung kommen. FIG 5 stellt das Prinzip der Anwendung von aktiven Wirbelerzeugern zur Effizienzsteigerung einer Gitterströmung dar. Dazu wird einem axialen Gitter, in FIG 5a dargestellt durch einen zylindrischen, in die Ebene abgerollten Schnitt, eine Anzahl von aktiven Wirbelerzeugern vorgeschaltet. FIG 5a zeigt eine eine Anzahl von Leitschaufeln 34 umfassende Leitschaufelreihe 33 einer Gasturbine, der strömungsmediumseitig eine eine Anzahl von Laufschaufeln 36 umfassende Laufschaufelreihe 35 nachgeschaltet ist. Die Leitschaufelreihe 34 und die Laufschaufelreihe 35 sind in einem nicht näher dargestellten Strömungskanal angeordnet, der vom Strömungsmedium S in der von dem Pfeil 2 angedeuteten Richtung durchströmt wird. Der Leitschaufelreihe 34 ist eine Wirbelerzeugerreihe 38 strömungsmediumseitig vorgeschaltet, die eine Anzahl von Profilen 1 umfasst. Die Profile 1 sind so ausgelegt, dass sie von einem äußeren Antrieb um ihre jeweilige Drehachse 14 rotiert werden. Während einer vollständigen Schwingungsperiode der Profile 1 erzeugt jedes Profil 1 an seiner Hinterkante 4 zwei Finite Kantenwirbel 6, die sich nach der Haftungsphase ablösen und sich auf der durch den Pfeil 40 angedeuteten Bahn durch den Strömungskanal bewegen. Die Finiten Kantenwirbel 6 bewegen sich durch die von den Profilen 1 auf sie übertragene Energie auf ihrer Bahn um die Leitschaufeln 34 herum und treffen auf die den Leitschaufeln 34 strömungsmediumseitig nachgeschalteten Laufschaufeln 36, an die sie ihre Energie abgeben. Die auf diese Weise erzeugten Strömungspulse steigern die Effizienz der Gitterströmung unter anderem durch die Nutzung des noch nicht vollständig verstandenen so genannten "Clocking-Effektes", eines Effektes, der auf der aerodynamischen Wechselwirkung verschiedener Gitter miteinander beruht und der zum Tragen kommt, wenn die Gitter eine genau definierte Position zueinander einnehmen. Der bereits bei der Positionierung der Leitschaufeln 34 relativ zu den Laufschaufeln 36 genutzte Clocking-Effekt wird durch die Erzeugung von in Dauer und Frequenz zur Bewegung der Laufschaufeln 36 passend erzeugten Strömungspulsen durch die Profile 1 weiter verstärkt. Er erhöht die Effizienz der Gitterströmung messbar und kann somit zur Effizienzsteigerung beispielsweise einer Gasturbine und damit zur Senkung ihrer Emissionen beitragen.

In FIG 5b ist ein möglicher Antrieb für die in FIG 5a dargestellten Profile 1 gezeigt. Die Profile 1 sind im Bereich ihrer Hinterkante 4 auf einer gemeinsamen Verbindungsstange 23 angebracht und in ihrem vorderen Bereich auf einer weiteren Verbindungsstange 30 um ihre jeweilige Drehachse 14 drehbar gelagert. Im Betriebsfall des Wirbelerzeugers bewegt der elektromagnetische Antrieb 27 über den hydraulisch arbeitenden Arbeitszylinder 32 die Verbindungsstange 23 nach oben bzw. nach unten. Es resultiert eine gleichphasige Drehung der Profile 1 um ihre jeweilige Drehachse 14.

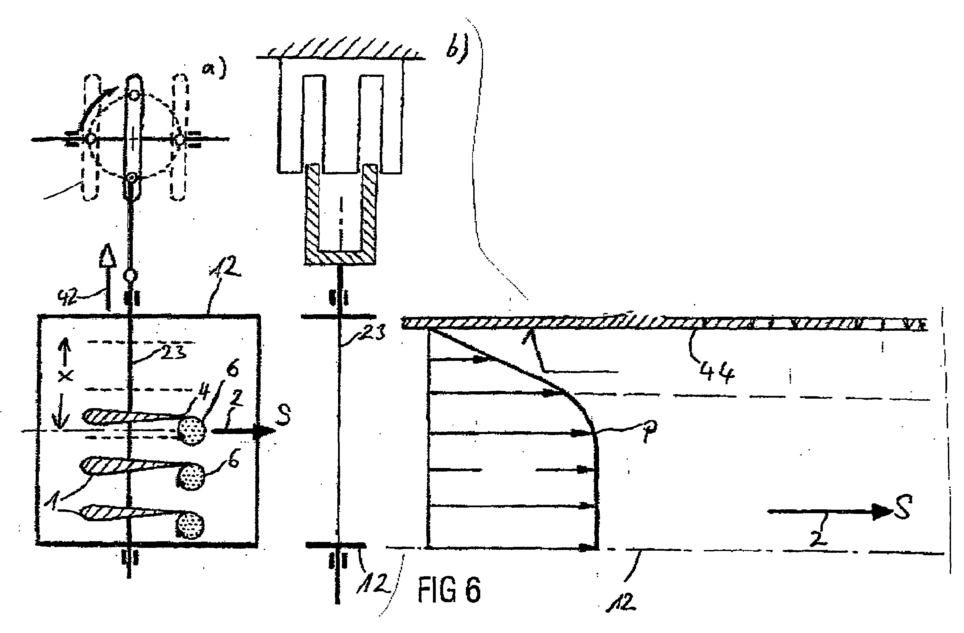

Der Wärme- und Stoffaustausch in einem Strömungsmedium quer zu seiner Strömungsrichtung kann durch dem Strömungsmedium aufgeprägte Geschwindigkeitsfluktuationen erheblich erhöht werden. Solche Geschwindigkeitsfluktuationen lassen sich besonders einfach und mit vergleichsweise geringem Druckverlust im Strömungsmedium durch den Einsatz aktiver Wirbelerzeuger aufprägen. FIG 6 zeigt eine Anordnung, in der von den Profilen 1 erzeugte Finite Kantenwirbel 6 zur Kühlung thermisch besonders belasteter Bauteile genutzt werden können. Dazu ist in einem Strömungskanal 12 beispielsweise einer Gasturbine eine Anzahl von Profilen 1, beispielsweise drei Profile 1, auf einer gemeinsamen Verbindungsstange 23 angeordnet. Die Verbindungsstange 23 kann durch einen äußeren Antrieb in die durch den Pfeil 42 angedeutete Richtung periodisch aufwärts und anschließend wieder abwärts bewegt werden. Der Antrieb der Verbindungsstange 23 kann dabei mechanisch wie in FIG 6a oder alternativ dazu elektromagnetisch wie in FIG 6b erfolgen. Die Profile 1 führen im Betriebsfall aufgrund des äußeren Antriebs eine Translationsbewegung um die Strecke x innerhalb des Strömungskanals 12 aus und prägen dem Strömungsmedium S dadurch das Geschwindigkeitsprofil p auf. Die an den bewegten Hinterkanten 4 der Profile 1 entstehenden und sich von den Profilen 1 ablösenden Finiten Kantenwirbel 6 wiederum prägen dem Geschwindigkeitsprofil p periodische Geschwindigkeitsfluktuationen auf, die den Wärmeaustausch quer zur Strömungsrichtung erheblich erhöhen und somit zur erwünschten Verbesserung der Kühlung der Wand 44 beitragen. Insbesondere ist die Verbesserung der Kühlungswirkung der Strömung auf die stromauf Verschiebung des laminar-turbulenten Umschlagpunktes der Strömung durch den Einsatz des Wirbelerzeugers zurückzuführen. Dadurch wird der Wärmeübergangskoeffizient deutlich erhöht und die Kühlwirkung verbessert. Somit kann bei einer gleichen Temperatur der Wand 44 Strömungsmedium S eingespart oder bei gleichem Aufwand an Strömungsmedium S eine Leistungs- und Wirkungsgraderhöhung der Gasturbine erzielt werden.

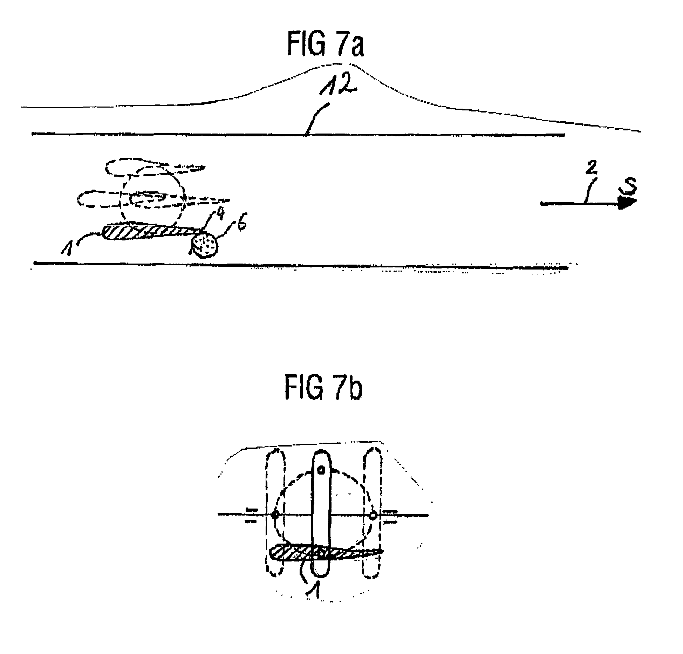

Der durch den Einsatz eines Wirbelerzeugers erhöhte Stoffaustausch quer zur Strömungsrichtung kann auch zum Mischen von Strömungsmedien miteinander genutzt werden. Dazu ist wie in FIG 7a dargestellt in einem von einem Strömungsmedium S in der Richtung des Pfeils 2 durchströmten Strömungskanal 12 ein Profil 1 abgeordnet, das durch einen äußeren Antrieb periodisch bewegt wird. Dabei erfolgt der Antrieb, wie in FIG 7b dargestellt, mechanisch über eine Kurbelschleife. Das sich periodisch bewegende Profil 1 erzeugt während jeder Periode zwei Finite Kantenwirbel 4, die an seiner Hinterkante 4 entstehen und sich nach der Haftungsphase ablösen. Die auf diese Weise gezielt erzeugten Turbulenzen stellten eine effiziente Mischung des Strömungsmediums S sicher, das beispielsweise aus mehreren Komponenten wie Luft und Brenngas oder leichtem Heizöl und Wasser bestehen kann, die miteinander vermischt werden sollen. Im Falle einer Gasturbine lässt sich durch die besonders gründliche Vermischung von Brenngas und Luft eine vollständige Verbrennung des Brenngases und damit eine Senkung der NO_{X}-Emissionen der Gasturbine erzielen. Dem Profil 1 zur Erzeugung von Wirbeln kann strömungsmediumseitig ein in FIG 7 nicht dargestelltes Profil zur Vernichtung von Wirbeln nachgeschaltet sein, falls eine turbulente Strömung im Weiteren Verlauf nicht erwünscht ist.

## Patentansprüche

1. Vorrichtung zur Erzeugung und/oder vernichtung von Wirbeln in einem Strömungsmedium (S), die einen Strömungskanal (12) und ein oder mehrere in dem Strömungskanal (12) angeordnete, zur Umströmung mit dem Strömungsmedium (S) vorgesehene Profile (1) umfasst, wobei dem oder jedem Profil (1) ein zur Erzeugung einer periodischen Oszillationsbewegung des jeweiligen Profils (1) relativ zum Strömungsmedium (S) mit einer Kreisfrequenz ω ausgelegter äußerer zur Vorrichtung gehörender Antrieb zugeordnet ist,
**dadurch gekennzeichnet, dass**
die periodische Oszillationsbewegung in einer rein translatorischen Verschiebung der Profile (1) senkrecht zu einer Strömungsrichtung des Strömungsmediums (S) besteht.

2. Vorrichtung nach Anspruch 1, wobei die Form und Größe der Profile (1) derart gewählt sind, dass im Betriebsfall der Quotient aus der über eine Bewegungsperiode des Profils (1) gemittelten Strömungsgeschwindigkeit bezogen auf den mittleren Querschnitt des Profils (1) zu der maximalen Strömungsgeschwindigkeit an der Profilhinterkante (4) einen vorgegebenen Wert aufweist.

3. Vorrichtung nach einem der Ansprüche 1 bis 2, der strömungsmediumseitig eine Vorrichtung zur Vernichtung von Wirbeln nachschaltbar ist.

4. Förderstrecke zum Transport eines Strömungsmediums (S), umfassend eine Vorrichtung nach einem der Ansprüche 1 bis 3, die eine Anzahl von Profilen (1), die eine periodische Oszillationsbewegung mit gleicher Kreisfrequenz ω und gleicher Phase ausführen, umfasst.

5. Axiales Gitter zur Durchströmung eines Strömungsmediums (S), umfassend eine Vorrichtung nach einem der Ansprüche 1 bis 3, die dem axialen Gitter strömungsmediumseitig vorgeschaltet ist und die eine Anzahl von Profilen (1), die eine periodische Oszillationsbewegung mit gleicher Kreisfrequenz ω und gleicher Phase ausführen, umfasst.

6. Kühlvorrichtung zum Kühlen thermisch belasteter Bauteile, die einen Strömungskanal (12), einen durch den Strömungskanal (12) geleiteten Kühlstrom sowie eine innerhalb des Strömungskanals (12) angeordnete Vorrichtung nach einem der Ansprüche 1 bis 3 umfasst.

7. Mischstrecke zum Mischen eines oder mehrerer Strömungsmedien (S) miteinander, die einen von den Strömungsmedien (S) durchströmbaren Strömungskanal (12) sowie eine Vorrichtung nach einem der Ansprüche 1 bis 3 umfasst.

8. Gasturbine mit einer Vorrichtung nach einem der Ansprüche 1 bis 7.

9. Verfahren zur Erzeugung von Wirbeln in einem Strömungsmedium (S) durch ein oder eine Anzahl von in einem Strömungskanal (12) angeordneten, zur Umströmung mit dem Strömungsmedium (S) vorgesehenen Profilen (1), wobei das Profil (1) oder die Profile (1) durch einen äußeren Antrieb periodisch mit der Kreisfrequenz ω oszillieren,
**dadurch gekennzeichnet, dass**
zur Energieübertragung in das Strömungsmedium der Quotient aus der über eine Bewegungsperiode des Profils (1) gemittelten Strömungsgeschwindigkeit bezogen auf den mittleren Querschnitt des Profils (1) und der maximalen Strömungsgeschwindigkeit an der Hinterkante (4) des Profils (1) zwischen 0,2 und 0,5 liegt und/oder zur Energieübertragung in das Profil (1) der Quotient über 0,5 liegt.

10. Verfahren nach Anspruch 9,
bei dem die erzeugten Wirbel stromabwärts von der Position im Strömungskanal (12), an der sie erzeugt wurden, ganz oder teilweise wieder vernichtet werden.

11. Verfahren nach einem der Ansprüche 9 bis 10,
das zum Transport eines Strömungsmediums (S) durch einen Strömungskanal (12) eingesetzt wird.

12. Verfahren nach einem der Ansprüche 9 bis 11,
das zur Effizienzsteigerung einer Gitterströmung des Strömungsmediums (S) durch ein innerhalb des Strömungskanals (12) angeordnetes Gitter eingesetzt wird.

13. Verfahren nach einem der Ansprüche 9 bis 11,
das zur Kühlung thermisch belasteter Bauteile durch ein Strömungsmedium (S) eingesetzt wird.

14. Verfahren nach einem der Ansprüche 9 bis 11,
dass zum Mischen eines oder mehrerer Strömungsmedien (S) in einem Strömungskanal (12) eingesetzt wird.

## Claims

1. Device for the generation and/or destruction of vortices in a flow medium (S), said device comprising a flow duct (12) and one or more profiles (1) arranged in the flow duct (12) and provided for flow around by the flow medium (S), the or each profile (1) being assigned an external drive belonging to the device designed for the generation of a periodic oscillating movement of the respective profile (1) in relation to the flow medium (S) with an angular frequency ω **characterized in that** the periodic oscillating movement consists of a purely translational displacement of the profiles (1) perpendicularly to a flow direction of the flow medium (S).

2. Device according to Claim 1, the shape and size of the profiles (1) being selected such that, during operation, the quotient of the flow velocity averaged over a movement period of the profile (1) with respect to the mean cross section of the profile (1) and the maximum flow velocity at the profile trailing edge (4) has a predetermined value.

3. Device according to either of Claims 1 or 2, which can be followed on the flow medium side by a device for the destruction of vortices.

4. Conveying zone for the transport of a flow medium (S), comprising a device according to one of Claims 1 to 3, which comprises a number of profiles (1) which execute a periodic oscillating movement with the same angular frequency ω and the same phase.

5. Axial cascade for the throughflow of a flow medium (S), comprising a device according to one of Claims 1 to 3, which precedes the axial cascade on the flow medium side and which comprises a number of profiles (1) which execute a periodic oscillating movement with the same angular frequency ω and the same phase.

6. Cooling device for the cooling of components subjected to high thermal load, which comprises a flow duct (12), a cooling stream conducted through the flow duct (12) and a device according to one of Claims 1 to 3 which is arranged within the flow duct (12).

7. Mixing zone for the mixing of one or more flow media (S) with one another, which comprises a flow duct (12) through which the flow media (S) are capable of flowing and a device according to one of Claims 1 to 3.

8. Gas turbine having a device according to one of Claims 1 to 7.

9. Method for the generation of vortices in a flow medium (S) by means of one or a number of profiles (1) arranged in a flow duct (12) and provided for flow around by the flow medium (S), the profile (1) or profiles (1) oscillating periodically with the angular frequency ω by means of an external drive **characterized in that** for the transmission of energy into the flow medium, the quotient of the flow velocity averaged over a movement period of the profile (1) with respect to the mean cross section of the profile (1) and the maximum flow velocity at the trailing edge (4) of the profile (1) is between 0.2 and 0.5 and/or for the transmission of energy into the profile (1), the quotient is above 0.5.

10. Method according to Claim 9, in which the generated vortices are completely or partially destroyed again downstream of the position in the flow duct (12) at which they were generated.

11. Method according to either of Claims 9 or 10, which is used for the transport of a flow medium (S) through a flow duct (12).

12. Method according to one of Claims 9 to 11, which is used for increasing the efficiency of a cascade flow of the flow medium (S) through a cascade arranged within the flow duct (12).

13. Method according to one of Claims 9 to 11, which is used for the cooling of components subjected to high thermal load by means of a flow medium (S).

14. Method according to one of Claims 9 to 11, which is used for mixing one or more flow media (S) in a flow duct (12).

## Revendications

1. Dispositif de production et/ou de suppression de tourbillons dans un fluide (S) en écoulement, qui comprend un canal (12) d'écoulement et un ou plusieurs profilés (1) disposés dans le canal (12) d'écoulement et prévus pour être contournés par le fluide (S) en écoulement, un entraînement extérieur appartenant au dispositif et conçu pour la production d'un mouvement d'oscillation périodique du profilé (1) respectif par rapport au fluide (S) en écoulement ayant une pulsation ω étant associé au profilé ou à chaque profilé (1),
**caractérisé en ce que**
le mouvement périodique d'oscillation est constitué d'un déplacement en translation pure des profilés (1) perpendiculairement à une direction d'écoulement du fluide (S) en écoulement.

2. Dispositif suivant la revendication 1, dans lequel la forme et la dimension des profilés (1) sont choisies de façon à ce que, en fonctionnement, le quotient de la vitesse d'écoulement, en moyenne sur une période d'oscillation, du profilé (1), rapportée à la section transversale médiane du profilé (1), à la vitesse maximum d'écoulement sur le bord (4) arrière du profilé ait une valeur prescrite.

3. Dispositif suivant l'une des revendication 1 à 2, en aval duquel peut être monté du côté du fluide en écoulement un dispositif de suppression de tourbillons.

4. Voie de transport d'un fluide (S) en écoulement, comprenant un dispositif suivant l'une des revendications 1 à 3, qui comporte un certain nombre de profilés (1) qui exécutent un mouvement périodique d'oscillation de même pulsation ω et de même phase.

5. Grille axiale de passage d'un fluide (S) en écoulement, comprenant un dispositif suivant l'une des revendications 1 à 3, qui est monté en amont du côté fluide en écoulement de la grille axiale et qui comprend un certain nombre de profilés (1) qui exécutent un mouvement périodique d'oscillation de même pulsation ω et de même phase.

6. Dispositif de refroidissement pour refroidir des éléments sollicités thermiquement, qui comprend un canal (12) d'écoulement, un courant de refroidissement passant dans le canal (12) d'écoulement ainsi qu'un dispositif suivant l'une des revendications 1 à 3 disposé dans le canal (12) d'écoulement.

7. Voie de mélange pour mélanger un ou plusieurs fluides (S) en écoulement entre eux, qui comprend un canal (12) d'écoulement, dans lequel les fluides (S) en écoulement peuvent passer, ainsi qu'un dispositif suivant l'une des revendications 1 à 3.

8. Turbine à gaz ayant un dispositif suivant l'une des revendications 1 à 7.

9. Procédé de production de tourbillons dans un fluide (S) en écoulement par un profilé (1) ou par un certain nombre de profilés (1) disposés dans un canal (12) d'écoulement et prévus pour être contournés par le fluide en écoulement, dans lequel le profilé (1) ou les profilés (1) sont mis en oscillation périodiquement à la pulsation w par un entraînement extérieur,
**caractérisé en ce que**
pour transmettre de l'énergie au fluide en écoulement, le quotient de la vitesse d'écoulement, en moyenne sur une période d'oscillation, du profilé (1), rapportée à la section transversale médiane du profilé (1), à la vitesse d'écoulement maximum sur le bord (4) arrière du profilé (1) est compris entre 0,2 et 0,5 et/ou pour la transmission d'énergie au profilé (1) le quotient est supérieur à 0,5.

10. Procédé suivant la revendication 9,
dans lequel on supprime à nouveau, en tout ou en partie, les tourbillons produits en aval de la position dans le canal (12) d'écoulement où ils ont été produits.

11. Procédé suivant l'une des revendications 9 à 10,
que l'on utilise pour le transport d'un fluide (S) en écoulement dans un canal (12) d'écoulement.

12. Procédé suivant l'une des revendications 9 à 11,
que l'on utilise pour augmenter l'efficacité d'un écoulement du fluide (S) en écoulement à travers une grille disposée dans le canal (12) d'écoulement.

13. Procédé suivant l'une des revendications 9 à 11,
que l'on utilise pour le refroidissement par un fluide (S) en écoulement d'éléments sollicités thermiquement.

14. Procédé suivant l'une des revendications 9 à 11,
que l'on utilise pour le mélange d'un ou de plusieurs fluides (S) en écoulement dans un canal (12) d'écoulement.
